# FASCICULE DE BREVET EUROPEEN

(11) **EP 1 695 605 B1**
(45) Date de publication et mention de la délivrance du brevet: **01.10.2008**
(21) Numéro de dépôt: 06110114.3
(22) Date de dépôt: 17.02.2006
(51) Int. Cl.: A01B 79/00

(54) **Procéde d'optimisation de l'épandage, machine d'épandage et programme d'ordinateur correspondants**
Verfahren zur Optimierung und Einstellung des Streuens, zugehörige Streuer und Computerprogramm
Process for the optimisation and adjustment of scattering, scattering machine and corresponding computer program

(30) Priorité: 25.02.2005 FR 0501976
(43) Date de publication de la demande: 30.08.2006
(73) Titulaire: SULKY-BUREL S.A.S, 35220 Chateaubourg (FR); CEMAGREF (Centre National du Machinisme Agricole du Génie Rural, des Eaux et des Forêts), 92163 Antony Cedex (FR)
(72) Inventeur: Leveille, M. Lionel, 35220 Saint-Didier (FR); Piron, Emmanuel, 03300 Creuzier le Vieux (FR); Miclet, M. Denis, 03150 Montoldre (FR)
(74) Mandataire: Bioret, Ludovic

(56) Documents cités:
- EP-A- 0 917 816
- EP-A- 1 402 766
- DE-A1- 19 835 487
- FR-A- 2 772 550

## Description

### 1. Domaine de l'invention

Le domaine de l'invention est celui de l'épandage de produits, par exemple d'engrais ou de semis, notamment sous une forme granulaire.

Plus précisément, l'invention concerne le contrôle de l'épandage assuré par une machine d'épandage agricole, et plus particulièrement l'optimisation des doses de particules affectées aux différentes zones d'une parcelle à traiter, pour une bonne adéquation avec les besoins réels en quantité de chaque zone.

Si l'invention trouve une forte justification dans le domaine de l'agriculture et plus précisément dans le domaine de l'agriculture de précision, l'application de l'invention à ces domaines ne doit pas être considérée par le lecteur comme limitative, l'invention pouvant également s'appliquer dans d'autres branches de l'industrie pouvant nécessiter le traitement d'une surface prédéterminée au moyen d'un épandage et/ou d'une irrigation de précision, en fonction d'un ensemble de contraintes de environnementales données.

### 2. État de la technique

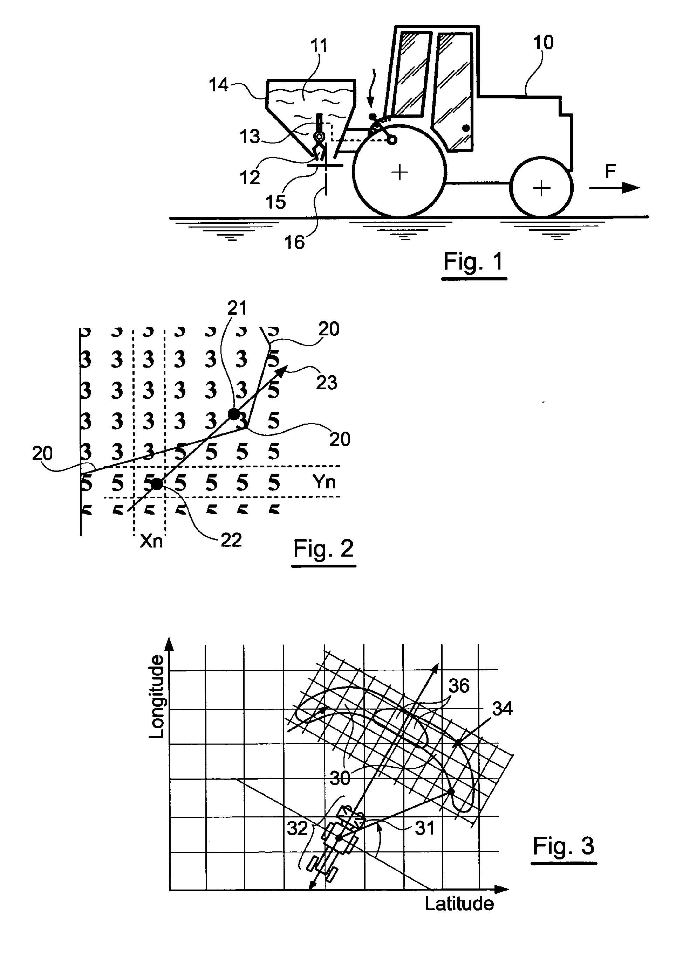

Dans les domaines de l'agriculture et notamment de l'agriculture de précision, les machines servant à épandre de l'engrais ou des semis sur une parcelle cultivable, se présentent généralement sous la forme d'un tracteur 10 portant une trémie 11 contenant l'engrais ou le semis 14 à épandre, comme illustré sur la figure 1.

Selon une technique classique, le fond de la trémie 11 comprend au moins une ouverture 12 se présentant sous la forme d'une goulotte 13 laissant passer le contenu 14 de la trémie 11 en surplomb d'un distributeur comprenant au moins un disque rotatif 15 portant des pales de projection. Les disques 15 sont le plus souvent disposés dans une position sensiblement horizontale et leur rotation autour d'un axe 16 sensiblement vertical favorise la projection du contenu 14 de la trémie par effet centrifuge, sous la forme d'une nappe s'étendant transversalement à l'arrière de la machine d'épandage.

Classiquement, les distributeurs équipant les machines d'épandage du domaine de l'agriculture utilisent au moins deux disques rotatifs tournant en sens inverses l'un par rapport à l'autre, une telle configuration permettant de réaliser un épandage en engrais et/ou en semis sur une grande largeur, généralement comprise entre 5 et 40 mètres, en fonction des paramètres de commande transmis au distributeur.

De telles machines d'épandage permettent de traiter une parcelle de terrain cultivable, le plus généralement par trajet prédéfini d'aller/retour sur celle-ci.

L'épandage est donc réalisé durant chaque trajet de la machine sur une bande d'une largeur prédéterminée, éventuellement modifiable, laquelle doit venir légèrement en chevauchement de la bande adjacente pour pallier la diminution de la densité en particules de la nappe d'épandage qu'il est possible de constater sur les bords de chaque bande traitée.

L'utilisation de telles machines s'avèrent cependant limitée et peu optimale dans un contexte lié à l'agriculture de précision dans lequel les doses réelles à épandre sur le sol d'une parcelle cultivable doivent tenir compte de consignes optimisées et préalablement établies, lesquelles doivent être en parfaite conformité avec les contraintes environnementales, ou encore avec les besoins réels estimés en semis ou en engrais pour le sol ou la culture de la parcelle.

Pour tendre vers une optimisation des doses de produits ou de particules (engrais ou semis) à épandre en différents points ou en différentes zones d'une parcelle à traiter, on connaît de l'art antérieur, notamment dans les documents de brevet n° EP 0 726 024, EP 0 761 084, EP 0 917 816, ou encore EP 1 181 857, des solutions consistant en une machine d'épandage centrifuge apte à prendre en compte des données d'une carte d'application préalablement mémorisée.

Ces machines d'épandage convertissent une dose consigne préalablement calculée et mémorisée sous la forme d'une carte de la parcelle à traiter, en une dose réelle délivrée sur le sol lors du passage de la machine d'épandage. Le pilotage du distributeur utilisé par la machine d'épandage (variation de la vitesse de rotation et/ou de l'inclinaison des disques rotatifs du distributeur, par exemple) est ainsi réalisé pendant le déplacement de la machine d'épandage sur la parcelle, de façon que la dose réellement délivrée corresponde sensiblement à la dose consigne prédéterminée.

Par exemple, dans le document de brevet n°EP 0 917 816, la solution préconisée repose sur une optimisation des caractéristiques physiques de distribution de la machine d'épandage et plus précisément de son distributeur, en fonction d'un trajet de la machine d'épandage préalablement déterminé par l'exploitant, et des doses consignes associées à ce trajet.

Une autre solution technique connue de l'art antérieur est donnée dans le document de brevet n° EP 0 726 024, laquelle permet d'anticiper le changement de la dose réelle à épandre à un instant donnée lors du déplacement de la machine d'épandage sur la parcelle à traiter en fonction de données acquises en temps réel relatives à la vitesse de déplacement et au positionnement géographique de la machine d'épandage sur ladite parcelle.

Une telle solution permet également un ajustement en continu, au cours du déplacement de la machine d'épandage, de la largeur de travail et du débit d'épandage en sortie du distributeur de particules (engrais, semis, etc.), en fonction de la position géographique réelle de ladite machine et relativement au contraintes relatives à la parcelle (proximité de la limite de parcelle, etc.).

Une dernière solution connue de l'art antérieur est donnée dans le document de brevet n° EP 0 761 084. Elle s'appuie sur un tramage préliminaire de la parcelle à traiter sous la forme d'une carte d'application et sur l'établissement d'un fichier de travail tenant compte des contraintes physiques et/ou mécaniques du distributeur utilisé et d'un trajet optimal prédéterminé que la machine d'épandage équipée du distributeur devra réellement emprunter sur la parcelle, ce trajet étant mémorisé relativement au tramage de la carte d'application.

Ensuite, durant son trajet sur la parcelle à traiter la machine d'épandage transmet aux organes de commande du distributeurs les informations de paramétrage provenant du fichier de travail préalablement mémorisées et correspondant à la position géographique réelle de ladite machine, de façon que la dose à délivrée à un instant donné en au moins un point de ladite parcelle corresponde effectivement à la dose consigne préalablement déterminée.

Dans toutes ces solutions connues de l'art antérieur visant à l'optimisation de la consigne d'épandage réellement délivrée en tous points, un inconvénient majeur est le manque de précision, puisqu'on pilote à un instant donné les composantes techniques du distributeur, notamment celles relatives au débit et à la largeur transversale de travail, en considérant que la distribution est rectiligne et homogène.

De plus, toutes ces solutions se contentent de capturer la position géographique de la machine d'épandage à un instant donné lorsque celle-ci est en travail sur la parcelle à traiter, de la mettre en correspondance avec la carte des doses consignes se présentant sous la forme d'un maillage de la parcelle, de façon à déterminer la valeur de la dose consigne que le distributeur doit libérer à cet instant.

Classiquement, on prend en compte la dose nécessaire au milieu de la largeur de travail, même si une dose inférieure ou supérieure est nécessaire ailleurs.

Ces solutions utilisent donc un procédé de calcul de la dose consigne qui s'avère imprécis. Cet inconvénient se trouve d'autant plus accentué dans les régions frontalières (20) situées entre les zones (mailles) (21) nécessitant un plus fort dosage de particules (semis ou engrais) et les zones (mailles) (22) nécessitant un tel dosage en particules inférieur, lorsque ces zones (mailles) (21, 22) sont traversées par un trajet (23) de la machine d'épandage. En effet, dans ces régions frontalières entre des zones à traiter nécessitant des dosages différents, les méthodes précitées permettent d'appliquer uniquement une très faible dose de particules, comme illustré sur la figure 2.

### 3. Objectifs de l'invention

L'invention a notamment pour objectif de pallier ces divers inconvénients de l'état de la technique.

Plus précisément, un objectif de l'invention est de fournir une technique permettant d'optimiser la gestion de la dose consigne que le distributeur doit réellement délivrer en tout point de la parcelle à traiter lors de l'épandage réalisé pendant le déplacement de la machine du même type, y compris dans les régions de la parcelle situées à la frontière des zones (mailles) nécessitant un plus fort dosage (semis ou engrais) et des zones (mailles) nécessitant un tel dosage en particules inférieur.

Un autre objectif de l'invention est de fournir un tel procédé qui n'introduise pas de biais dans le calcul ou la gestion de l'optimisation de la gestion de la dose consigne, c'est-à-dire qui ne penne en compte que des paramètres qui soient conformes aussi bien à la réalité des composants techniques propres au distributeur ou à la machine d'épandage, qu'à la réalité de la position géographique de la machine durant l'épandage, ou encore à la réalité de la forme de la nappe d'épandage, sans introduire de quelconques hypothèses et/ou approximations.

Un objectif supplémentaire de l'invention est de fournir un tel procédé qui permette de délivrer une dose consigne réelle qui, en tous points de la parcelle à traiter, soit parfaitement conforme à la consigne optimale préalablement calculée.

Un autre objectif de l'invention est de fournir un tel procédé qui soit ergonomique, c'est-à-dire à la fois simple d'utilisation, de compréhension et de mise en oeuvre pour un manipulateur (un exploitant agricole, par exemple) même faiblement expérimenté.

Un dernier objectif de l'invention est de fournir un tel procédé qui soit peu gourmand en temps et en puissance de calcul, tout en restant de coût raisonnable.

### 4. Résumé de l'invention

Ces objectifs, ainsi que d'autres qui apparaîtront par la suite, sont atteints selon l'invention à l'aide d'un procédé de contrôle de l'épandage assuré par une machine agricole (10-16) d'épandage, équipée d'au moins un distributeur de particules, la quantité de particules délivrée à un instant donné étant fonction d'une consigne tenant compte d'une position géographique de la machine d'épandage sur une parcelle à traiter et d'une carte prédéterminée des besoins en particules sur différentes portions, ou mailles, de ladite parcelle à traiter.

La consigne tient compte également d'au moins une information représentative de la forme en croissant de la nappe (46) d'épandage (48) au sol du distributeur de particules.

De façon avantageuse, le procédé selon l'invention comprend les étapes préparatoires suivantes :
- étape 1' : obtention de la carte prédéterminée, sous la forme d'une série de doses consignes affectées à chaque maille d'une représentation de la parcelle découpée en mailles de dimensions prédéterminées;
- étape 2' : obtention d'au moins une représentation spatiale de la nappe d'épandage associée au type du distributeur utilisé.

Ce procédé comprend également et de façon préférentielle, les étapes suivante réalisées en temps réel lors du déplacement de la machine d'épandage sur la parcelle à traiter :
- étape 3' : pour chaque position géographique réelle acquise pour le distributeur, détermination d'au moins une estimation de la zone couverte par la nappe d'épandage ;
- étape 4' : détermination pour chacune des positions géographiques du distributeur à un instant donné d'au moins une consigne d'épandage optimale, tenant compte de chacune des doses consigne affectée à une maille couverte par la zone couverte ;
- étape 5' : transmission aux actionneurs de commande d'épandage de la dose optimale calculée.

Avantageusement, l'une au moins des étapes de calcul temps réel tient compte d'au moins une donnée d'information relative à la parcelle à traitée ayant été préalablement mémorisée. Ces informations peuvent aussi bien concerner la forme ou la topographie de la parcelle, que des aspects relatifs à la qualité du sol en différents points ou en différentes zones, ou bien encore des données environnementales, par exemple. Il est bien entendu qu'il peut être tenu compte d'un grand nombre de paramètres non limitatif concernant la parcelle dans la mise en oeuvre du procédé selon l'invention, ces paramètres pouvant être mémorisés dans la mémoire d'un ordinateur, par exemple.

Dans une variante de réalisation de l'invention, le procédé de contrôle de l'épandage comprend les étapes préparatoires suivantes :
- étape 1 : obtention de la carte prédéterminée, sous la forme d'une série de doses consignes affectées à chaque maille d'une représentation de la parcelle découpée en mailles de dimensions prédéterminées;
- étape 2: obtention d'au moins une représentation spatiale de la nappe d'épandage associée au type du distributeur utilisé ;
- étape 3: récupération de données représentatives d'au moins un trajet prédéterminé qui sera effectué par la machine d'épandage pour traiter la parcelle, se présentant sous la forme d'une pluralité de positions géographiques successives estimées du distributeur sur la parcelle ;
- étape 4: détermination, pour chacune des positions géographiques, d'au moins une estimation de la zone couverte par la nappe d'épandage ;
- étape 5: détermination pour chacune des positions géographiques du distributeur d'au moins une consigne d'épandage optimale, tenant compte de chacune des doses consigne affectée à une maille couverte par la zone couverte ;
de façon à obtenir une carte de préconisation d'épandage optimisée.
Dans ce mode de réalisation de l'invention, on privilégie en amont de la phase réelle d'épandage sur la parcelle, un certains nombres de travaux préparatoires de traitement de la parcelle. Ces travaux peuvent être préparer avantageusement à la ferme de l'exploitant, ce qui permet à ce dernier de prévoir également par modélisation les trajets optimaux à prévoir durant las phase ultérieure d'épandage sur sa parcelle, la forme de la nappe à prévoir en sortie du distributeur en différentes positions géographiques sur ces trajets, et les doses consignes optimales à délivrer en ces différentes positions géographiques.
Un autre avantage de ce mode de réalisation concerne la possibilité de mémoriser les résultats de ces travaux préparatoires, de façon qu'il soit possible à l'exploitant de les réutiliser en tout ou partie d'une année sur l'autre, si nécessaire.

De façon préférentielle, lors du déplacement de la machine d'épandage, le procédé selon l'invention transmet aux actionneurs de commandes d'épandage la ou les dose(s) optimale(s) prévue(s) pour chacune des positions géographiques réelles comparées avec les positions géographiques estimées.

Préférentiellement, ce procédé comprend en outre une étape de correction en temps réel des consignes, lorsque la machine d'épandage quitte le trajet prédéterminé.

Cette correction en temps réel peut s'effectuer soit en prenant en compte la moyenne des doses consignes des mailles de la carte avoisinantes de la maille dans laquelle se trouve la machine d'épandage suite à son écart de trajectoire, soit en modifiant la forme de la nappe elle-même en sortie de distributeur.

De façon avantageuse, le procédé génère une alarme si le sens de parcours du trajet emprunté par la machine d'épandage dans la parcelle n'est pas celui pris en compte pour la détermination des consignes lors de la phase préparatoire.

Avantageusement, l'étape de détermination d'une consigne d'épandage calcule une moyenne des doses consigne. Il est bien entendu que ce mode de calcul par moyennage n'est pas limitatif et peut être étendu ou complété à d'autres modes de calcul.

Préférentiellement, le distributeur met en oeuvre au moins deux disques rotatifs d'épandage pouvant être pilotés indépendamment. Il détermine en outre au moins une première série de consignes comprenant chacune au moins une sous-consigne spécifiques pour chacun des disques rotatifs.

Le procédé selon l'invention tient compte, de façon nouvelle et inventive, de la forme en croissant de la nappe d'épandage et avantageusement d'au moins une caractéristiques appartiennent au groupe comprenant au moins :
- le type de distributeur de particules ;
- la largeur d'épandage ;
- la largeur de travail ;
- le débit d'épandage ;
- la nature desdites particules (engrais, sable, etc.) ;
- la masse volumique, la granulométrie, le coefficient de frottement sur la surface en rotation desdits disques d'épandage ;
- le trajet emprunté sur ladite parcelle par ladite machine d'épandage.

Préférentiellement, le procédé selon l'invention ajuste la dose consigne en fonction d'au moins une donnée suivantes de forme, de topographie de la parcelle, d'obstacle(s) contenu(s) dans celle-ci, du type appartenant au groupe comprenant :
- les coins ;
- les pointes ;
- les zones de courbures ;
- les inclinaisons de pentes
- les bordures.

Avantageusement, le procédé selon l'invention détermine également au moins une seconde série de consignes, associées respectivement à des sens de parcours du trajet dans la parcelle.

Dans un mode de réalisation avantageux de l'invention, l'optimisation est réalisée pour au moins une nappe. Il est en effet possible, voir intéressant, du simple fait que la nappe de sortie du distributeur est en réalité composé de deux nappes en forme de croissant obtenues respectivement en sortie de chacun des deux disques rotatifs, de souhaiter pouvoir optimiser cette optimisation, soit pour une seule nappe, soit pour toutes les nappes de chacun des disques rotatifs équipant le distributeur d'engrais ou de semis (ou de tout autre produit d'épandage liquide ou poudreux).

Le précédé met en oeuvre également et de façon avantageuse, une étape de modification d'au moins une partie de la forme de la nappe d'épandage suivant que la machine d'épandage fonctionne en mode pleine largeur, ou bien en mode bordure. Que cette modification peut s'accompagner également d'une modification de la dose consigne à délivrer suivant que la machine fonctionne en mode bordure, ou bien en mode pleine largeur.

Préférentiellement, le procédé selon l'invention met en oeuvre une étape de modification en temps réel d'au moins une partie de la forme de la nappe d'épandage en fonction d'au moins une contrainte environnementale de la parcelle détectée par la machine d'épandage, la contrainte appartenant au groupe comprenant au moins :
- les inclinaisons de pentes
- les bordures.
- les clôtures ;
- les haies
- les obstacles isolés.

L'invention concerne également de façon avantageuse un programme d'ordinateur comprenant des instructions de code de programme pour l'exécution des étapes du procédé de contrôle de l'épandage assuré par une machine agricole d'épandage, équipé d'au moins un distributeur de particules, la quantité de particules délivrée à un instant donné étant fonction d'une consigne tenant compte d'une position géographique de la machine d'épandage sur une parcelle à traiter et d'une carte prédéterminée des besoins en particules sur différentes portions, ou mailles, la consigne tenant compte également d'au moins une information représentative de la forme de la nappe d'épandage au sol dudit distributeur de particules.

Un tel programme d'ordinateur peut être indifféremment exécuté sur un ordinateur localisé à la ferme de l'exploitant et/ou exécuté par un calculateur ou un ordinateur embarqué à bord de la machine d'épandage.

Dans un mode de réalisation avantageux de l'invention, il est possible d'envisagé que les fichiers de travail préparés de façon préliminaire par l'exploitant sur son ordinateur localisé à la ferme puissent être transmis par liaison sans fil type Wi-Fi ou GSM, directement à l'ordinateur embarqué à bord de la machine d'épandage, de façon à simplifier les manipulations de fichiers à partir de CDRom ou de disquettes.

L'invention concerne également une machine d'épandage équipée d'au moins un distributeur de particules comprenant des moyens de contrôle d'une quantité de particules délivrée à un instant donné en fonction d'une consigne tenant compte d'une position géographique de la machine d'épandage sur une parcelle à traiter et d'une carte prédéterminée des besoins en particules sur différentes portions, ou mailles, de ladite parcelle à traiter.
Une telle machine d'épandage comprend préférentiellement des moyens d'estimation et de calcul de la dose consigne prenant en compte au moins une information représentative de la forme de la nappe d'épandage au sol du distributeur de particules.

Avantageusement, une telle machine d'épandage comprend :
- des moyens d'obtention de la carte prédéterminée, sous la forme d'une série de doses consignes affectées à chaque maille d'une représentation de la parcelle découpée en mailles de dimensions prédéterminées;
- des moyens d'obtention d'au moins une représentation spatiale de la nappe d'épandage associée au type du distributeur utilisé ;
- des moyens de récupération de données représentatives d'au moins un trajet prédéterminé qui sera effectué par la machine pour traiter la parcelle, les données se présentant sous la forme d'une pluralité de positions géographiques successives estimées du distributeur sur la parcelle ;
- des moyens de détermination, pour chacune des positions géographiques, d'au moins une estimation de la zone couverte par la nappe d'épandage ;
- des moyens de détermination pour chacune des positions géographiques du distributeur d'au moins une consigne d'épandage optimale, tenant compte de chacune des doses consigne affectée à une maille couverte par la zone couverte.
   L'ensemble des moyens précités est mis en oeuvre de façon à obtenir avantageusement une carte de préconisation d'épandage optimisé.

Préférentiellement, une telle machine selon l'invention comprend des moyens de commande des actionneurs d'au moins eux disques rotatifs, de façon que durant son déplacement la machine délivre la dose optimale prévue pour chacune des positions géographiques réelles comparées avec les positions géographiques estimées.

De façon également préférentielle, la machine d'épandage selon l'invention comprend des moyens de correction des consignes travaillant en temps réel, lorsque la machine quitte le trajet prédéterminé.

Il est donc de l'objet d'une telle machine que de fournir également de façon avantageuse des moyens de génération d'une alarme si le sens de parcours du trajet dans la parcelle n'est pas celui pris en compte pour la détermination des consignes.

Une telle machine d'épandage comprend en outre et de façon également avantageuse:
- des moyens de détermination d'au moins une estimation de la zone couverte par la nappe d'épandage pour chaque position géographique réelle acquise pour le distributeur en temps réel lors du déplacement de la machine d'épandage sur la parcelle à traiter ;
- des moyens de détermination pour chacune des positions géographiques du distributeur à un instant donné d'au moins une consigne d'épandage optimale, tenant compte de chacune des doses consigne affectée à une maille couverte par la zone couverte.
La machine d'épandage selon l'invention comprend dans un mode de réalisation préférentielle de l'invention, des moyens d'ajustement de la dose consigne en fonction d'au moins une donnée suivantes de forme, de topographie de la parcelle, d'obstacle(s) contenu(s) dans celle-ci, du type appartenant au groupe comprenant :
- les coins ;
- les pointes ;
- les zones de courbures ;
- les inclinaisons de pentes
- les remblais ;
- les déblais ;
- les bordures.
Avantageusement, cette machine d'épandage comprend des moyens de détermination d'au moins une série de consignes respectivement associées à des sens de parcours du trajet dans la parcelle et des moyens de variation et/ou d'ajustement d'au moins une partie de la forme de la nappe d'épandage suivant que la machine d'épandage travaille en mode pleine largeur, ou bien en mode bordure.

Enfm, la machine d'épandage selon l'invention comprend préférentiellement des moyens de variation et/ou d'ajustement de en temps réel d'au moins une partie de la forme de la nappe d'épandage en fonction d'au moins une contrainte environnementale de la parcelle détectée par des moyens de détection de ladite machine d'épandage, la contrainte appartenant au groupe comprenant au moins :
- les inclinaisons de pentes
- les bordures.
- les clôtures ;
- les haies
- les obstacles isolés.

L'invention repose donc sur une approche complètement nouvelle et inventive de l'optimisation de la gestion de la dose consigne à considérer en tenant compte aussi bien des informations techniques et de position géographique propres à la machine d'épandage et à son distributeur correspondant, que des informations représentatives de la forme en croissant de la nappe d'épandage de particules (engrais, semis, etc.) réellement disponible sur le sol de la parcelle à traiter, en sortie dudit distributeur, ladite nappe ayant été préalablement modélisée et mémorisée.

En effet, il est important de souligner que dans les solutions connues, tous les travaux préparatoires de détermination des doses consignes optimales et des trajets de la machine d'épandage sont effectués sous l'hypothèse erronée que la nappe d'épandage correspondant à une salve de particules granulaires en sortie du distributeur est sensiblement rectangulaire et uniforme. Or, les inventeurs ont constaté qu'une telle nappe de recouvrement du sol en particules en sortie de distributeur a nullement une forme rectangulaire, mais plutôt une forme pouvant s'apparenter à un croissant.

En d'autres termes, dans les solutions de l'art antérieur précitées, il est introduit un biais important dans la phase de calcul et d'optimisation de la dose consigne à considérer, cette optimisation ne prenant pas en compte la réalité de la nappe d'épandage relative au type de distributeur utilisé.

En conséquence, la dose consigne calculée et prise en compte par la machine d'épandage dans ces solutions de l'art antérieur ne sera jamais une dose consigne optimale au sens des besoins réellement estimés pour le traitement de la parcelle ou des soins devant être apportés à une culture d'une variété de plante donnée, ce qui va précisément à l'encontre de la définition et des objectifs fixés dans la cadre d'une agriculture de précision.

L'invention, en revanche, permet de fortement améliorer l'exactitude des doses consignes à appliquer.

L'invention s'inscrit donc parfaitement dans un contexte d'agriculture de précision dont l'un au moins des objectifs associés vise à coller au plus près des besoins réels de la parcelle et/ou de la culture à traiter, tout en tenant compte également des contraintes environnementales avoisinantes.

### 5. Liste des figures

D'autres caractéristiques et avantages de l'invention apparaîtront plus clairement à la lecture de la description suivante d'un mode de réalisation préférentiel de l'invention, donné à titre d'exemple illustratif et non limitatif, faite en référence aux dessins annexés parmi lesquels :
- la figure 1 est une vue schématique de côté d'une machine d'épandage de semis ou d'engrais ;
- la figure 2 illustre le principe de répartition des doses consignes dans une carte d'application pour chaque point de coordonnées géographiques prédéterminées d'une parcelle cultivable à traiter ;
- la figure 3 présente un exemple de détermination et/ou modélisation de la forme réelle de la nappe de particules granulaires recouvrant le sol en sortie du distributeur, pendant la phase d'épandage ;
- la figure 4 donne un synoptique des grandes étapes du procédé selon l'invention ;
- la figure 5 donne un exemple d'une carte de consignes optimisées agronomiquement relativement à une parcelle cultivable devant être traitée, ladite carte se présentant sous la forme d'une carte de préconisation de la gestion des nappes gauche et droite du distributeur de la machine d'épandage, pendant le déplacement de cette dernière suivant des trajets d'épandage prédéterminés et optimisés. Une telle carte gère les nappes droite et gauche de l'épandeur ;
- la figure 6 est un organigramme résumant les étapes principales du procédé selon l'invention.

### 6. Description d'un mode de réalisation préféré de l'invention

La présente invention concerne un procédé d'optimisation du calcul et de la gestion de la dose consigne que le distributeur, équipé par exemple de disques rotatifs d'épandage de particules (engrais, semis, etc.) granulaires (ou sous une autre forme, telle que liquide ou poudre) doit réellement délivrer pendant l'épandage, en cohérence avec chaque dose consigne préconisée pour chaque position géographique d'une parcelle.

Selon ce procédé de contrôle de l'épandage d'une machine agricole d'épandage, équipé d'au moins un distributeur de particules, la quantité de particules délivrée à un instant donné est fonction d'une consigne tenant compte de la position géographique de la machine d'épandage sur la parcelle à un instant donné et d'une carte prédéterminée des besoins en particules sur différentes portions, ou mailles, de la parcelle à traiter, mais également d'au moins une information représentative de la forme de la nappe d'épandage au sol en sortie du distributeur de particules.
On constate en effet que la forme réelle de cette nappe n'est pas rectangulaire, et il est important de prendre en compte cette contrainte.

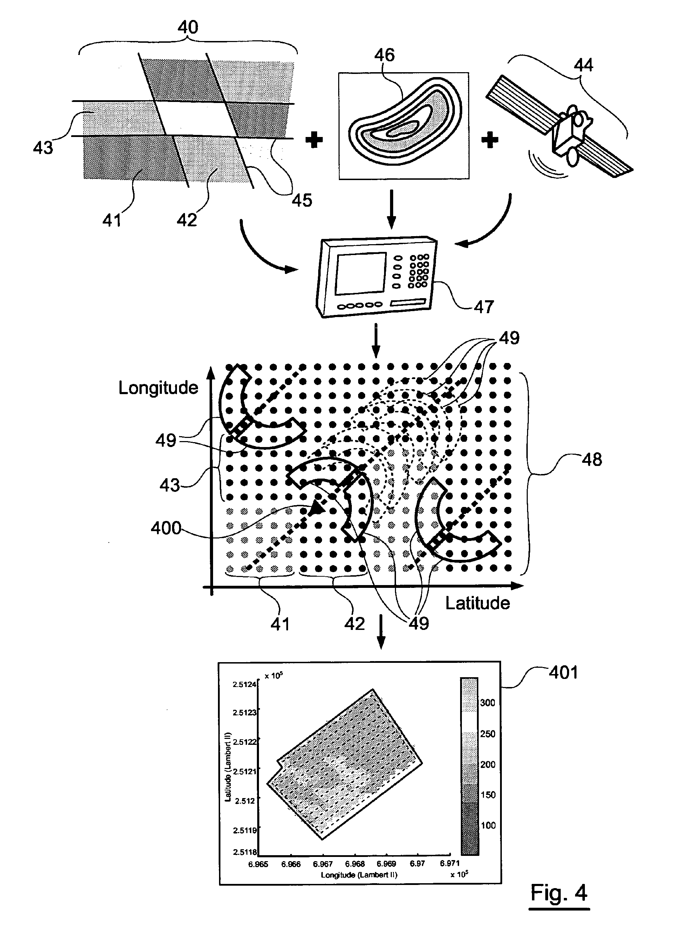

On décrit ci-après et conjointement avec la figure 4, un mode de réalisation préféré de l'invention dans lequel plusieurs étapes sont mises en oeuvre, certaines étant réalisées de façon préliminaire, au cours de travaux préparatoires par l'exploitant, et d'autres étant réalisées durant la phase d'épandage, en temps réel, pendant le déplacement de la machine d'épandage sur la parcelle à traiter.

Dans une première étape préliminaire du procédé selon l'invention, une carte (40) des doses consignes (41, 42, 43) de la parcelle à traiter est calculée et mémoriser, en tenant compte éventuellement d'informations satellitaires (44) du type cartographique.

On obtient alors une représentation cartographique (40) de la parcelle à traiter sous la forme d'un maillage (45) non régulier dans lequel chaque maille (41, 42, 43) contient une valeur de dose consigne agronomique optimale devant être apportée durant la phase réelle d'épandage à la zone de la parcelle correspondante.

Suivant le modèle/type et les caractéristique techniques et/ou mécaniques du distributeur équipant la machine d'épandage, une deuxième étape préliminaire du procédé selon l'invention consiste en la modélisation et en la mémorisation d'au moins une représentation spatiale de la nappe d'épandage (46) obtenue en sortie du distributeur de utilisé.

En effet, comme illustré sur la figure 3, une telle nappe (30) d'épandage obtenue en sortie du distributeur (31) d'une machine d'épandage (32) n'est pas de forme rectangulaire comme présupposé et pris en compte dans les solutions de l'art antérieur, mais d'une forme (30) pouvant s'apparenter à un croissant.

Plus précisément, la forme en croissant de cette nappe (30) est composée de l'assemblage des nappes droite (33) et gauche (34) produites par chacun des deux disques rotatifs du distributeur, ces deux nappes (33, 34) se recouvrant en au moins une zone (36) en l'une de leurs extrémités respectives.

Ainsi, la modélisation de la nappe d'épandage spatiale (46) réalisée à l'occasion de cette deuxième étape (facultative si celle-ci a déjà été réalisée et mémorisée) est réalisée en tenant compte de la réalité des nappes droite (33) et gauche (34) du distributeur considéré. Une telle approche colle donc parfaitement à la réalité.

Les données (40, 46) sont mémorisées soit de façon délocalisée, par exemple dans la mémoire d'un ordinateur (47) situé à la ferme de l'exploitant, soit dans la mémoire d'un ordinateur embarqué à bord de la machine d'épandage.

Dans ce mode de réalisation préféré du procédé selon l'invention, une troisième étape consiste à estimer et/ou défmir une pluralité de points de passage représentatifs d'au moins un trajet (400) prédéterminé qui devra être suivi par la machine d'épandage pour traiter la parcelle, en estimant pour chacune de ces positions géographiques successives, les zones (49) alentours qui seront réellement couvertes par la nappe d'épandage préalablement modélisée et mémorisée.

Cette troisième étape permet d'obtenir une deuxième carte d'approximation des différentes zones de la parcelle à traiter qui devront être réellement couvertes par la nappe du distributeur, en chaque point successif du trajet (400) suivi par la machine d'épandage.

Toutes les doses consignes agronomiques contenues dans cette approximation de la position d'une nappe sont ensuite moyennées de façon à pouvoir remplacer toutes les nappes initialement positionnées en chaque point du trajet (400), par la dose moyenne ainsi calculée.

Cela permet de déterminer d'obtenir en fin de traitement une carte de préconisation d'épandage optimisée agronomiquement (401), qui sera ensuite chargée dans l'ordinateur (47) embarqué sur la machine d'épandage. L'ordinateur couplé à un système de positionnement par satellite (GPS, par exemple) recoupera alors les données concernant la position géographique réelle de la machine d'épandage sur la parcelle à traiter à un instant donné, avec les données mémorisées dans la carte de préconisation d'épandage optimisée (401), et transmettra les ordres de commande correspondant aux actionneurs des disques rotatifs du distributeur, pour que soit délivré en tous points de la parcelle la dose consigne optimale de particules (grains, engrais, etc.) préconisée par la carte de préconisation, en temps réel, au fur et à mesure du déplacement de la machine suivant le trajet prédéterminé.

Cette carte (401) de préconisation devient alors la carte de consigne de l'épandeur en ce sens que l'ordinateur (47) embarqué commande les actionneurs droits et gauche des disques indépendamment, de façon à pouvoir ajuster la dose dans la zone réellement épandue pour chacun des disques rotatifs en faisant par exemple varier la forme de la nappe (46) en jouant sur les formes des nappes droite (33) et gauche (34) du distributeur, et/ou en jouant de façon indépendante sur moyens différents moyens de réglage, par exemple et de façon non limitative, sur la goulotte du distributeur, et/ou sur les vitesses de rotation, inclinaison des deux disques rotatifs.

Dans une variante de ce mode de réalisation, il est possible d'envisager que la troisième étape soit réalisée par un calcul en temps réel d'au moins une partie de la carte de préconisation de doses consignes optimisée, sans calcul ou estimation préliminaires du trajet emprunté par la machine d'épandage sur la parcelle à traiter. Une telle variante nécessitera en contrepartie d'augmenter les capacités de l'ordinateur embarqué (47) à bord de la machine d'épandage, aussi bien en termes de puissance de calcul, qu'en termes de volume de mémoire, dans l'objectif de ne pas subir un accroissement gênant des temps de calcul en phase de travail de la machine d'épandage.

### 7. Résumé de l'invention et de ses principaux avantages

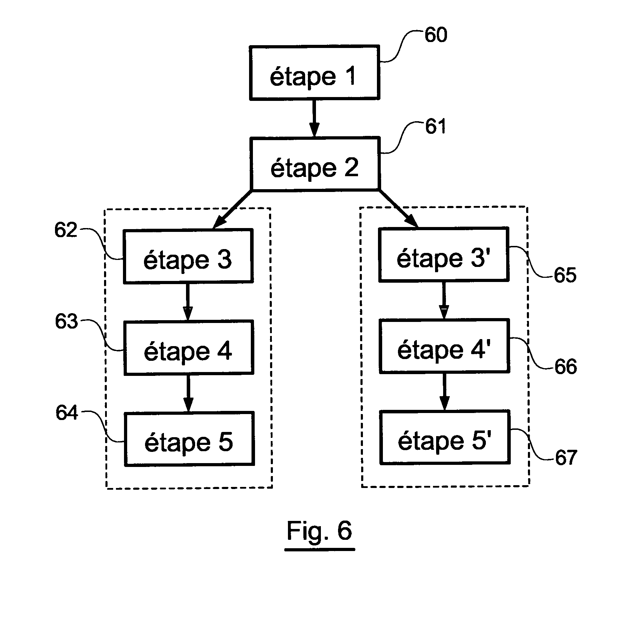

En résumé et comme illustré sur la figure 6, l'invention repose sur donc sur la construction d'une carte (500) de préconisation d'épandage optimisé obtenue par la mise en oeuvre des étapes préparatoires suivantes :
- étape 1 (60) : obtention d'une carte prédéterminée, sous la forme d'une série de doses consignes affectées à chaque maille d'une représentation de la parcelle découpée en mailles de dimensions prédéterminées;
- étape 2 (61) : obtention d'au moins une représentation spatiale de la nappe d'épandage associée au type du distributeur utilisé ;
- étape 3 (62): récupération de données représentatives d'au moins un trajet prédéterminé qui sera effectué par la machine d'épandage pour traiter la parcelle, se présentant sous la forme d'une pluralité de positions géographiques successives estimées du distributeur sur la parcelle ;
- étape 4 (63) : détermination, pour chacune des positions géographiques, d'au moins une estimation de la zone couverte par la nappe d'épandage ;
- étape 5 (64) : détermination et délivrance pour chacune des positions géographiques du distributeur d'au moins une consigne d'épandage optimale, tenant compte de chacune des doses consigne affectée à une maille couverte par la zone couverte.

Dans une variante de ce mode de réalisation préféré, les étapes 3 et 4 précitées peuvent être remplacées par les suivantes réalisées en temps réel par un ordinateur embarqué à bord de la machine d'épandage, pendant le déplacement de cette dernière :
- étape 3' (65) : pour chaque position géographique réelle acquise en temps réel (au moyen d'un GPS par exemple) pour le distributeur, détermination d'au moins une estimation de la zone couverte par ladite nappe d'épandage ;
- étape 4' (66) : détermination et délivrance pour chacune des positions géographiques du distributeur à un instant donné sur la parcelle à traiter d'au moins une consigne d'épandage optimale, tenant compte de chacune des doses consigne affectées à une maille couverte par la zone couverte ;
- étape 5' (67) : transmission aux actionneurs de chacun desdits disques rotatifs des commandes d'épandage de ladite dose optimale calculée.

Cette nouvelle approche selon l'invention permet avantageusement et sur la base de la modélisation préliminaire, ou bien d'un calcul en temps réel et durant le déplacement de la machine d'épandage sur la parcelle, d'un nouveau type de carte de préconisation (401) établie en considération de la forme réelle de la nappe d'épandage.

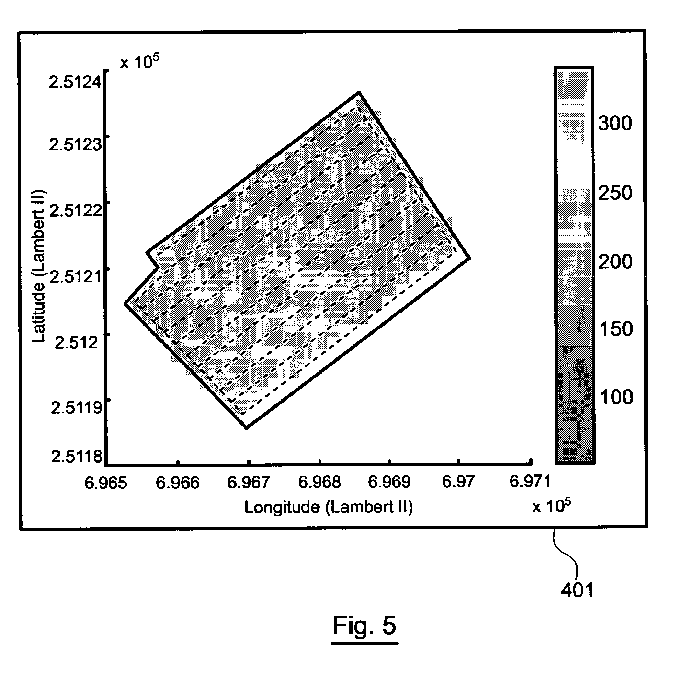

Cette carte de préconisation (401), comme illustré sur un exemple à la figure 5, contient les informations pertinentes pour commander les actionneurs des disques rotatifs du distributeur d'engrais ou de semis (ou de tout autre type de contenu : liquide ou poudre, par exemple), de façon qu'une dose d'au moins un type d'engrais et/ou de semis correspondant à la dose la plus proche de la dose consigne agronomique puisse être apportée en tous points de la parcelle cultivable à traiter.

Une telle approche nouvelle et inventive se trouve en parfaite adéquation avec les contraintes propres à l'agriculture de précision, lesquelles visent à apporter une ou plusieurs justes doses d'un ou plusieurs produits nécessaire à la maturité d'une plante donnée, tout en limitant les risques de sur et/ou de sous dosages et, tout en réduisant également les risques de pollution de la parcelle elle-même ou de son environnement plus ou moins proche.

## Revendications

1. Procédé de contrôle de l'épandage assuré par une machine agricole (10-16) d'épandage, équipée d'au moins un distributeur de particules, la quantité de particules délivrée à un instant donné étant fonction d'une consigne tenant compte d'une position géographique de ladite machine d'épandage sur une parcelle à traiter et d'une carte prédéterminée des besoins en particules sur différentes portions, ou mailles, de ladite parcelle à traiter,
**caractérisé en ce que** ladite consigne tient compte également d'au moins une information représentative de la forme en croissant de la nappe (46) d'épandage (48) obtenue au sol en sortie dudit distributeur de particules.

2. Procédé de contrôle de l'épandage selon la revendication 1, **caractérisé en ce qu'**il comprend les étapes préparatoires suivantes :
- étape 1' : obtention de ladite carte prédéterminée, sous la forme d'une série de doses consignes affectées à chaque maille d'une représentation de ladite parcelle découpée en mailles de dimensions prédéterminées;
- étape 2' : obtention d'au moins une représentation spatiale de ladite nappe d'épandage associée au type dudit distributeur utilisé ;
et les étapes suivante réalisées en temps réel lors du déplacement de ladite machine d'épandage sur ladite parcelle à traiter :
- étape 3' : pour chaque position géographique réelle acquise pour ledit distributeur, détermination d'au moins une estimation de la zone couverte par ladite nappe d'épandage ;
- étape 4' : détermination pour chacune desdites positions géographiques dudit distributeur à un instant donné d'au moins une consigne d'épandage optimale, tenant compte de chacune des doses consigne affectée à une maille couverte par ladite zone couverte ;
- étape 5' : transmission aux actionneurs de commande d'épandage de ladite dose optimale calculée.

3. Procédé de contrôle d'épandage selon la revendication 2, **caractérisé en ce que** l'une au moins desdites étapes de calcul en temps réel tient compte d'au moins une donnée d'information relative à ladite parcelle à traiter ayant été préalablement mémorisée.

4. Procédé de contrôle de l'épandage selon la revendication 1, **caractérisé en ce qu'**il comprend les étapes préparatoires suivantes :
- étape 1 : obtention de ladite carte prédéterminée, sous la forme d'une série de doses consignes affectées à chaque maille d'une représentation de ladite parcelle découpée en mailles de dimensions prédéterminées;
- étape_2 : obtention d'au moins une représentation spatiale de ladite nappe d'épandage associée au type dudit distributeur utilisé ;
- étape 3 : récupération de données représentatives d'au moins un trajet prédéterminé qui sera effectué par ladite machine d'épandage pour traiter ladite parcelle, se présentant sous la forme d'une pluralité de positions géographiques successives estimées dudit distributeur sur ladite parcelle ;
- étape 4: détermination, pour chacune desdites positions géographiques, d'au moins une estimation de la zone couverte par ladite nappe d'épandage ;
- étape 5 : détermination pour chacune desdites positions géographiques dudit distributeur d'au moins une consigne d'épandage optimale, tenant compte de chacune des doses consigne affectées à une maille couverte par ladite zone couverte ;
de façon à obtenir une carte de préconisation d'épandage optimisée.

5. Procédé de contrôle de l'épandage selon la revendication 4, **caractérisé en ce que** lors du déplacement de ladite machine d'épandage, il transmet aux actionneurs de commandes d'épandage ladite dose optimale prévue pour chacune des positions géographiques réelles comparées avec lesdites positions géographiques estimées.

6. Procédé de contrôle d'épandage selon l'une quelconque des revendications 4 et 5, **caractérisé en ce qu'**il comprend une étape de correction en temps réel desdites consignes, lorsque ladite machine d'épandage quitte le trajet prédéterminé.

7. Procédé de contrôle d'épandage selon l'une quelconque des revendications 4 à 6, **caractérisé en ce qu'**il génère une alarme si le sens de parcours du trajet dans ladite parcelle n'est pas celui pris en compte pour la détermination desdites consignes.

8. Procédé de contrôle d'épandage selon les revendications 4 à 7, **caractérisé en ce que** ladite étape de détermination d'une consigne d'épandage calcule une moyenne desdites doses consigne.

9. Procédé de contrôle d'épandage selon l'une quelconque des revendications 1 à 8, **caractérisé en ce que** ledit distributeur met en oeuvre au moins deux disques rotatifs d'épandage pouvant être pilotés indépendamment, et **en ce qu'**il détermine au moins une première série de consignes comprenant chacune au moins une sous-consigne spécifiques pour chacun desdits disques rotatifs.

10. Procédé de contrôle d'épandage selon l'une quelconque des revendications 1 à 9, **caractérisé en ce qu'**il tient compte de la forme de ladite nappe d'épandage et d'au moins une caractéristiques appartenant au groupe comprenant au moins :
- le type de distributeur de particules ;
- la largeur d'épandage ;
- la largeur de travail ;
- le débit d'épandage ;
- la nature desdites particules (engrais, sable, etc.) ;
- la masse volumique, la granulométrie, le coefficient de frottement sur la surface en rotation desdits disques d'épandage ;
- le trajet emprunté sur ladite parcelle par ladite machine d'épandage.

11. Procédé de contrôle d'épandage selon l'une quelconque des revendications 1 à 10, **caractérisé en ce qu'**il ajuste ladite dose consigne en fonction d'au moins une donnée suivantes de forme, de topographie de ladite parcelle, d'obstacle(s) contenu(s) dans celle-ci, du type appartenant au groupe comprenant :
- les coins ;
- les pointes ;
- les zones de courbures ;
- les inclinaisons de pentes
- les bordures.

12. Procédé de contrôle d'épandage selon l'une quelconque des revendications 9 à 11, **caractérisé en ce qu'**il détermine au moins une seconde série de consignes, associées respectivement à des sens de parcours du trajet dans ladite parcelle.

13. Procédé de contrôle d'épandage selon l'une quelconque des revendications 1 à 12, **caractérisé en ce que** l'optimisation est réalisée pour au moins une nappe.

14. Procédé de contrôle d'épandage selon l'une quelconque des revendications 1 à 13, **caractérisé en ce qu'**il met en oeuvre une étape de modification d'au moins une partie de la forme de ladite nappe d'épandage suivant que ladite machine d'épandage fonctionne en mode pleine largeur, ou bien en mode bordure.

15. Procédé de contrôle d'épandage selon l'une quelconque des revendications 1 à 13, **caractérisé en ce qu'**il met en oeuvre une étape de modification en temps réel d'au moins une partie de la forme de ladite nappe d'épandage en fonction d'au moins une contrainte environnementale de ladite parcelle détectée par ladite machine d'épandage, ladite contrainte appartenant au groupe comprenant au moins :
- les inclinaisons de pentes
- les bordures.
- les clôtures ;
- les haies
- les obstacles isolés.

16. Programme d'ordinateur comprenant des instructions de code de programme pour l'exécution des étapes du procédé de contrôle de l'épandage assuré par une machine agricole d'épandage, équipée d'au moins un distributeur de particules, la quantité de particules délivrée à un instant donné étant fonction d'une consigne tenant compte d'une position géographique de ladite machine d'épandage sur une parcelle à traiter et d'une carte prédéterminée des besoins en particules sur différentes portions, ou mailles, de ladite parcelle à traiter, et ladite consigne tenant compte également d'au moins une information représentative de la forme en croissant de la nappe d'épandage au sol dudit distributeur de particules, selon l'une quelconque des revendications 1 à 15 lorsque ledit programme est exécuté sur un ordinateur.

17. Machine d'épandage équipée d'au moins un distributeur de particules comprenant des moyens de contrôle d'une quantité de particules délivrée à un instant donné en fonction d'une consigne tenant compte d'une position géographique de ladite machine d'épandage sur une parcelle à traiter et d'une carte prédéterminée des besoins en particules sur différentes portions, ou mailles, de ladite parcelle à traiter,
**caractérisée en ce que** ladite machine comprend des moyens d'estimation et de calcul de ladite consigne prenant en compte au moins une information représentative de la forme en croissant de la nappe d'épandage au sol dudit distributeur de particules.

18. Machine d'épandage selon la revendication 17, **caractérisée en ce qu'**elle comprend :
- des moyens d'obtention de ladite carte prédéterminée, sous la forme d'une série de doses consignes affectées à chaque maille d'une représentation de ladite parcelle découpée en mailles de dimensions prédéterminées;
- des moyens d'obtention d'au moins une représentation spatiale de ladite nappe d'épandage associée au type dudit distributeur utilisé ;
- des moyens de récupération de données représentatives d'au moins un trajet prédéterminé qui sera effectué par ladite machine pour traiter ladite parcelle, lesdites données se présentant sous la forme d'une pluralité de positions géographiques successives estimées dudit distributeur sur ladite parcelle ;
- des moyens de détermination, pour chacune desdites positions géographiques, d'au moins une estimation de la zone couverte par ladite nappe d'épandage ;
- des moyens de détermination pour chacune desdites positions géographiques dudit distributeur d'au moins une consigne d'épandage optimale, tenant compte de chacune des doses consigne affectée à une maille couverte par ladite zone couverte ;
l'ensemble desdits moyens étant mis en oeuvre de façon à obtenir une carte de préconisation d'épandage optimisé.

## Claims

1. Method for controlling broadcasting provided by an agricultural broadcasting machine (10 - 16) equipped with at least one particle distributor, the quantity of particles delivered at a given instant being dependent on a reference variable taking account of a geographical position of said broadcasting machine on a plot to be treated and of a predetermined chart of the particle requirements on different portions, or grid cells, of said plot to be treated,
**characterized in that** said reference variable also takes account of at least one information item that is representative of the crescent-shaped form of the broadcasting (48) expanse (46), obtained on the ground, coming out from said particle distributor.

2. Method for controlling broadcasting according to Claim 1, **characterized in that** it comprises the following preparatory stages:
- Stage 1': obtaining of said predetermined chart, in the form of a series of reference-variable doses allocated to each grid cell of a representation of said plot segmented into grid cells of predetermined dimensions;
- Stage 2': obtaining of at least one spatial representation of said broadcasting expanse associated with the type of said distributor used;
and the following stages realized in real-time as said broadcasting machine travels on said plot to be treated:
- Stage 3': for each actual geographical position acquired for said distributor, determination of at least one estimation of the zone covered by said broadcasting expanse;
- Stage 4': determination, for each of said geographical positions of said distributor at a given instant, of at least one optimum broadcasting reference variable, taking account of each of the reference-variable doses allocated to a grid cell covered by said covered zone;
- Stage 5': transmission of said calculated optimum dose to the broadcasting control actuators.

3. Method for controlling broadcasting according to Claim 2, **characterized in that** at least one of said real-time calculation stages takes account of at least one information data item, relating to said plot to be treated, that has previously been stored in memory.

4. Method for controlling broadcasting according to Claim 1, **characterized in that** it comprises the following preparatory stages:
- Stage 1: obtaining of said predetermined chart, in the form of a series of reference-variable doses allocated to each grid cell of a representation of said plot segmented into grid cells of predetermined dimensions;
- Stage 2: obtaining of at least one spatial representation of said broadcasting expanse associated with the type of said distributor used;
- Stage 3: retrieval of data that are representative of at least one predetermined course that will be effected by said broadcasting machine for the purpose of treating said plot, being in the form of a plurality of estimated successive geographical positions of said distributor on said plot;
- Stage 4: determination, for each of said geographical positions, of at least one estimation of the zone covered by said broadcasting expanse;
- Stage 5; determination, for each of said geographical positions of said distributor, of at least one optimum broadcasting reference variable, taking account of each of the reference-variable doses allocated to a grid cell covered by said covered zone;
such that an optimized broadcasting recommendation chart is obtained.

5. Method for controlling broadcasting according to Claim 4, **characterized in that**, as said broadcasting machine travels, it transmits to the broadcasting control actuators said optimum dose planned for each of the actual geographical positions compared with said estimated geographical positions.

6. Method for controlling broadcasting according to either of Claims 4 or 5, **characterized in that** it comprises a stage of real-time correction of said reference variables, when said broadcasting machine leaves the predetermined course.

7. Method for controlling broadcasting according to any one of Claims 4 to 6, **characterized in that** it generates an alarm if the direction of travel on the course of said plot is not that taken into account for determination of said reference variables.

8. Method for controlling broadcasting according to Claims 4 to 7, **characterized in that** said stage of determination of a broadcasting reference variable calculates an average of said reference-variable doses.

9. Method for controlling broadcasting according to any one of Claims 1 to 8, **characterized in that** said distributor uses at least two rotary broadcasting discs that can be operated independently, and that it determines at least one first series of reference variables, each comprising at least one specific sub-reference variable for each of said rotary discs.

10. Method for controlling broadcasting according to any one of Claims 1 to 9, **characterized in that** it takes account of the form of said broadcasting expanse and of at least one characteristic belonging to the group comprising at least:
- the type of particle distributor;
- the broadcasting width;
- the working width;
- the broadcasting delivery rate;
- the nature of said particles (fertilizer, sand, etc.);
- the density, the granulometry and the coefficient of friction on the rotating surface of said broadcasting discs;
- the course taken by said broadcasting machine on said plot.

11. Method for controlling broadcasting according to any one of Claims 1 to 10, **characterized in that** it adjusts said reference-variable dose in dependence on at least one following data item of form, topography of said plot, obstacle(s) contained in the latter, of the type belonging to the group comprising:
- corners;
- headlands;
- curvature zones;
- slope inclinations;
- borders.

12. Method for controlling broadcasting according to any one of Claims 9 to 11, **characterized in that** it determines at least one second series of reference variables, respectively associated with directions of travel on the course of said plot.

13. Method for controlling broadcasting according to any one of Claims 1 to 12, **characterized in that** optimization is realized for at least one expanse.

14. Method for controlling broadcasting according to any one of Claims 1 to 13, **characterized in that** it uses a stage of modification of at least one portion of the form of said broadcasting expanse according to whether said broadcasting machine is operating in full-width mode or in border mode.

15. Method for controlling broadcasting according to any one of Claims 1 to 13, **characterized in that** it uses a stage of real-time modification of at least one portion of the form of said broadcasting expanse in dependence on at least one environmental constraint of said plot detected by said broadcasting machine, said constraint belonging to the group comprising at least:
- slope inclinations;
- borders;
- fences;
- hedges;
- isolated obstacles.

16. Computer program comprising program code instructions for execution of the stages of the method for controlling broadcasting provided by an agricultural broadcasting machine equipped with at least one particle distributor, the quantity of particles delivered at a given instant being dependent on a reference variable taking account of a geographical position of said broadcasting machine on a plot to be treated and of a predetermined chart of the particle requirements on different portions, or grid cells, of said plot to be treated, and said reference variable also taking account of at least one information item that is representative of the crescent-shaped form of the broadcasting expanse, on the ground, from said particle distributor, according to any one of Claims 1 to 15, when said program is executed on a computer.

17. Broadcasting machine equipped with at least one particle distributor comprising means for controlling a quantity of particles delivered at a given instant in dependence on a reference variable taking account of a geographical position of said broadcasting machine on a plot to be treated and of a predetermined chart of the particle requirements on different portions, or grid cells, of said plot to be treated,
**characterized in that** said machine comprises means for estimation and calculation of said reference variable taking account of at least one information item that is representative of the crescent-shaped form of the broadcasting expanse, on the ground, from said particle distributor.

18. Broadcasting machine according to Claim 17,
**characterized in that** it comprises:
- means for obtaining said predetermined chart, in the form of a series of reference-variable doses allocated to each grid cell of a representation of said plot segmented into grid cells of predetermined dimensions;
- means for obtaining at least one spatial representation of said broadcasting expanse associated with the type of said distributor used;
- means for retrieval of data that are representative of at least one predetermined course that will be effected by said broadcasting machine for the purpose of treating said plot, said data being in the form of a plurality of estimated successive geographical positions of said distributor on said plot;
- means for determination, for each of said geographical positions, of at least one estimation of the zone covered by said broadcasting expanse;
- means for determination, for each of said geographical positions of said distributor, of at least one optimum broadcasting reference variable, taking account of each of the reference-variable doses allocated to a grid cell covered by said covered zone;
all of said means being used such that an optimized broadcasting recommendation chart is obtained.

## Patentansprüche

1. Verfahren zum Steuern eines Streuvorganges, mit Hilfe einer landwirtschaftlichen Streu-Maschine (10 - 16), die mit mindestens einem Teilchenverteiler ausgestattet ist, wobei die Zahl der zu einem gegebenen Zeitpunkt abgegebenen Teilchen eine Funktion eines Befehls ist, der die geographische Lage der besagten Streu-Maschine auf einer zu behandelnden Ackerfläche sowie eine vorgegebene Landkarte des Teilchenbedarfes auf verschiedenen Teilen oder Maschen der besagten zu behandelnden Ackerfläche berücksichtigt,
**dadurch gekennzeichnet, dass** der besagte Befehl ebenfalls mindestens eine Information berücksichtigt, die für die sichelförmige Fläche (46) der Streuung (48) repräsentativ ist, die am Boden am Ausgang des besagten Teilchenverteilers entsteht.

2. Verfahren zum Steuern eines Streuvorganges nach Anspruch 1, **dadurch gekennzeichnet, dass** es die folgenden Vorbereitungsschritte umfasst:
- Schritt 1': Erhalten der besagten vorgegebenen Landkarte in Form einer Reihe von Befehlsmaßen, die einer jeden Masche einer Darstellung der besagten, in Maschen vorgegebener Größe aufgeteilten Ackerfläche, zugeordnet sind;
- Schritt 2': Erhalten von mindestens einer räumlichen Darstellung der mit der Art der besagten Verteilungsmaschine zusammenhängenden Streufläche;
sowie die nachfolgenden, in Realzeit während der Bewegung der besagten Streu-Maschine auf der besagten zu behandelnden Ackerfläche ausgeführten Schritte:
- Schritt 3': Bestimmen von mindestens einer Schätzung des von der besagten Streufläche abgedeckten Bereiches, für jede für die besagte Verteilungsmaschine erhaltene reelle geographische Lage,
- Schritt 4': Bestimmen, zu einem gegebenen Zeitpunkt, für jede der besagten geographischen Lagen der besagten Verteilungsmaschine, von mindestens einem optimalen Streubefehl, welcher jede der Befehlsmaßen berücksichtigt, die einer der Maschen zugeordnet ist, die selbst von dem besagten abgedeckten Bereich abgedeckt wird;
- Schritt 5': Übermittlung des besagten berechneten optimalen Streubefehls an die Stellglieder für die Streubefehle.

3. Verfahren zum Steuern eines Streuvorganges nach Anspruch 2, **dadurch gekennzeichnet, dass** zumindest einer der besagten Berechnungsschritte in Realzeit mindestens einen vorher gespeicherten Datenwert berücksichtigt, der die besagte zu behandelnde Ackerfläche betrifft.

4. Verfahren zum Steuern eines Streuvorganges nach Anspruch 1, **dadurch gekennzeichnet, dass** es die folgenden Vorbereitungsschritte umfasst:
- Schritt 1: Erhalten der besagten vorgegebenen Landkarte in Form einer Reihe von Befehlsmaßen, die einer jeden Masche einer Darstellung der besagten, in Maschen vorgegebener Größe aufgeteilten Ackerfläche, zugeordnet sind;
- Schritt 2: Erhalten von mindestens einer räumlichen Darstellung der mit der Art der besagten Verteilungsmaschine zusammenhängenden Streufläche;
- Schritt 3: Rückgewinnen von repräsentativen Daten von mindestens einer vorgegebenen Wegstrecke, die von der besagten Streu-Maschine zum Behandeln der besagten Ackerfläche durchlaufen wird, wobei diese Daten in Form einer Vielzahl von geschätzten aufeinanderfolgenden geographischen Lagen der besagten Verteilungsmaschine auf der besagten Ackerfläche in Erscheinung treten;
- Schritt 4: Bestimmen, für jede der besagten geographischen Lagen, von mindestens einer Schätzung des von der besagten Streufläche abgedeckten Bereiches;
- Schritt 5: Bestimmen für jede der besagten geographischen Lagen der besagten Verteilungsmaschine, von mindestens einem optimalen Streubefehl, welcher jede der Befehlsmaßen berücksichtigt, die einer der Maschen zugeordnet ist, die selbst von dem besagten abgedeckten Bereich abgedeckt wird;
um eine Landkarte optimierter Streuempfehlungen zu erhalten.

5. Verfahren zum Steuern eines Streuvorganges nach Anspruch 4, **dadurch gekennzeichnet, dass** es während der Bewegung der besagten Streu-Maschine die besagte optimale Maß an die Stellglieder für die Streubefehle übermittelt, welche für jede der reellen, mit den besagten geschätzten geographischen Lagen verglichenen geographischen Lagen, vorgesehen ist.

6. Verfahren zum Steuern eines Streuvorganges nach einem der Ansprüche 4 oder 5, **dadurch gekennzeichnet, dass** es einen Korrekturschritt in Realzeit der besagten Befehle für den Fall aufweist, dass die besagte Streu-Maschine die vorgegebene Wegstrecke verlässt.

7. Verfahren zum Steuern eines Streuvorganges nach einem der Ansprüche 4 bis 6, **dadurch gekennzeichnet, dass** es eine Alarmmeldung abgibt, wenn die Richtung der Wegstrecke auf der besagten Ackerfläche nicht diejenige ist, die zum Bestimmen der besagten Befehle berücksichtigt wurde.

8. Verfahren zum Steuern eines Streuvorganges nach einem der Ansprüche 4 bis 7, **dadurch gekennzeichnet, dass** der besagte Schritt zum Bestimmen eines Streubefehls einen Mittelwert der besagten Befehlsmaßen berechnet.

9. Verfahren zum Steuern eines Streuvorganges nach einem der Ansprüche 1 bis 8, **dadurch gekennzeichnet, dass** die besagte Verteilungsmaschine mindestens zwei Streudrehscheiben verwendet, die unabhängig voneinander gesteuert werden können und, dass es mindestens eine erste Reihe von Befehlen bestimmt, die jeweils mindestens einen für jede der besagten Drehscheiben spezifischen Unterbefehl aufweisen.

10. Verfahren zum Steuern eines Streuvorganges nach einem der Ansprüche 1 bis 9, **dadurch gekennzeichnet, dass** es die Form der besagten Streufläche sowie mindestens eine Eigenschaft aus der folgenden Gruppe berücksichtigt:
- die Art der Verteilungsmaschine;
- die Streugröße;
- die Arbeitsbreite;
- den Streudurchsatz;
- die Art der besagten Teilchen (Dünger, Sand usw.);
- die Volumenmasse, die Körnung, den Reibungskoeffizienten, auf der drehbaren Fläche der besagten Streuscheiben;
- die auf der besagten Ackerfläche von der besagten Streu-Maschine zurückgelegte Wegstrecke.

11. Verfahren zum Steuern eines Streuvorganges nach einem der Ansprüche 1 bis 10, **dadurch gekennzeichnet, dass** es den besagten befehlsmaßen als Funktion von mindestens einem der folgenden Datenwerte für Form, Topographie der besagten Ackerfläche, in ihr enthaltene(n) Hindernisse(n) einstellt, welche in einer der folgenden Gruppen angesiedelt ist:
- Ecken;
- Spitzen;
- gebogene Bereiche;
- Neigungen von Schräglagen;
- Randbereiche.

12. Verfahren zum Steuern eines Streuvorganges nach einem der Ansprüche 9 bis 11, **dadurch gekennzeichnet, dass** es mindestens eine zweite Reihe von Befehlen bestimmt, die jeweils Wegstreckenrichtungen auf der besagten Ackerfläche zugeordnet sind.

13. Verfahren zum Steuern eines Streuvorganges nach einem der Ansprüche 1 bis 12, **dadurch gekennzeichnet, dass** die Optimierung für mindestens eine Fläche durchgeführt wird.

14. Verfahren zum Steuern eines Streuvorganges nach einem der Ansprüche 1 bis 13, **dadurch gekennzeichnet, dass** es einen Änderungsschritt für mindestens einen Teil der Form der besagten Streufläche zum Einsatz bringt, je nachdem ob der Betrieb der besagten Streu-Maschine als Funktion der gesamten Breite oder des Randes eingestellt ist.

15. Verfahren zum Steuern eines Streuvorganges nach einem der Ansprüche 1 bis 13, **dadurch gekennzeichnet, dass** es einen Änderungsschritt in Realzeit für mindestens einen Teil der Form der besagten Streufläche als Funktion von mindestens einem von der besagten Streu-Maschine erfassten, für die besagte Ackerfläche geltenden Umweltzwang zum Einsatz bringt, wobei der besagte Umweltzwang der Gruppe angehört, die mindestens folgendes umfasst:
- Neigungen von Schräglagen;
- Randbereiche;
- Umzäunungen;
- Hecken;
- alleinstehende Hindernisse.

16. EDV-Programm, das die Befehle zum Durchführen der Schritte des Steuerungsverfahrens umfasst, das von einer landwirtschaftlichen Streu-Maschine ausgeführt wird, die mindestens einen Teilchenverteiler aufweist, wobei die zu einem gegebenen Zeitpunkt abgegebene Teilchenzahl Funktion eines Befehls ist, der eine geographische Lage der besagten Streu-Maschine auf einer zu behandelnden Ackerfläche und eine vorgegebene Landkarte des Teilchenbedarfes auf verschiedenen Teilen oder Maschen der besagten zu behandelnden Ackerfläche berücksichtigt, und wobei der besagte Befehl ebenfalls mindestens eine Information berücksichtigt, die für die am Boden vom besagten Teilchenverteiler erzeugte Sichelform der Streufläche nach einem der Ansprüche 1 bis 15 berücksichtigt, wenn das Programm auf einem Rechner läuft.

17. Streu-Maschine, die mindestens einen Teilchenverteiler aufweist, der über Steuerungsmittel für eine Teilchenmenge verfügt, die zu einem gegebenen Zeitpunkt abgegeben wird, als Funktion eines Befehls, der die geographische Lage der besagten Streu-Maschine auf einer zu behandelnden Ackerfläche sowie eine vorgegebene Landkarte des Teilchenbedarfes auf verschiedenen Teilen oder Maschen der besagten zu behandelnden Ackerfläche berücksichtigt,
**dadurch gekennzeichnet, dass** die besagte Maschine über Mittel zum Schätzen und Berechnen des besagten Befehls verfügt, wobei mindestens eine Information berücksichtigt wird, die repräsentativ für die Sichelfläche der von dem besagten Teilchenverteiler am Boden erzeugten Streufläche ist.

18. Streu-Maschine nach Anspruch 17, **dadurch gekennzeichnet, dass** sie folgendes umfasst:
- Mittel zum Erhalten der besagten vorgegebenen Landkarte in Form einer Reihe von Befehlsmaßen, die einer jeden Masche einer Darstellung der besagten, in Maschen vorgegebener Größe aufgeteilten Ackerfläche zugeordnet sind;
- Mittel zum Erzielen von mindestens einer räumlichen Darstellung der besagten, von der Art der verwendeten Verteilungsmaschine abhängigen Streufläche;
- Mittel zum Rückgewinnen von repräsentativen Daten mindestens einer vorgegebenen Wegstrecke, die von der besagten Maschine zum Behandeln der besagten Ackerfläche durchlaufen wird, wobei diese Daten in Form einer Vielzahl von geschätzten aufeinanderfolgenden geographischen Lagen der besagten Verteilungsmaschine auf der besagten Ackerfläche in Erscheinung treten;
- Mittel zum Bestimmen, für jede der besagten geographischen Lagen, von mindestens einer Schätzung des von der besagten Streufläche abgedeckten Bereiches;
- Mittel zum Bestimmen, für jede der besagten geographischen Lagen der besagten Verteilungsmaschine, von mindestens einem optimalen Streubefehl, welcher jede der Befehlsmaßen berücksichtigt, die einer der Maschen zugeordnet ist, die selbst von dem besagten abgedeckten Bereich abgedeckt wird
wobei die Menge der besagten Mittel so eingesetzt wird, dass man eine Landkarte optimierter Streuempfehlungen erhält.
